# EUROPÄISCHE PATENTSCHRIFT

(11) **EP 1 177 650 B1**
(45) Veröffentlichungstag und Bekanntmachung des Hinweises auf die Patenterteilung: **19.01.2005**
(21) Anmeldenummer: 00938552.7
(22) Anmeldetag: 11.05.2000
(51) Int. Cl.: H04J 14/06

(54) **EMPFÄNGER UND VERFAHREN FÜR EINE OPTISCHE INFORMATIONSÜBERTRAGUNG**
RECEIVER AND METHOD FOR OPTICALLY TRANSMITTING INFORMATION
RECEPTEUR ET PROCEDE DE TRANSMISSION OPTIQUE D'INFORMATIONS

(30) Priorität: 12.05.1999 DE 19922178; 10.08.1999 DE 19937741; 08.09.1999 DE 19942936
(43) Veröffentlichungstag der Anmeldung: 06.02.2002
(73) Patentinhaber: SIEMENS AKTIENGESELLSCHAFT, 80333 München (DE)
(72) Erfinder: NOE, Reinhold, 33100 Paderborn (DE)
(86) Internationale Anmeldenummer: PCT/DE2000/001496
(87) Internationale Veröffentlichungsnummer: WO 2000/070806

(56) Entgegenhaltungen:
- US-A- 5 062 153
- HEISMANN F ET AL: "AUTOMATIC POLARIZATION DEMULTIPLEXER FOR POLARIZATION-MULTIPLEXED TRANSMISSION SYSTEMS" PROCEEDINGS OF THE EUROPEAN CONFERENCE ON OPTICAL COMMUNICATION (ECOC),CH,ZURICH, SEV, Bd. CONF. 19, 12. September 1993 (1993-09-12), Seiten 401-404, XP000492247 in der Anmeldung erwähnt

## Beschreibung

Die Erfindung betrifft ein Verfahren für den optischen Informationsempfang mit Polarisationsmultiplex/Polarisationsumtastung nach dem Oberbegriff des Patentanspruchs 1 und einen Empfänger für solche Signale nach dem Oberbegriff des unabhängigen Patentanspruchs 11.

Polarisationsmultiplex (Polarization Division Multiplex, PolDM) kann zur Erhöhung der Kapazität eines optischen Übertragungssystems verwendet werden.
Im Tagungsband der European Conference on Optical Communications 1993, Montreux, Schweiz, S. 401-404, Beitrag WeP9.3 (F. Heismann et al., "Automatic Polarization Demultiplexer for Polarization-Multiplexed Transmission Systems") ist ein optisches PolDM-Übertragungsystem beschrieben. Ein wesentliches Problem ist die Einregelung eines empfängerseitigen Polarisationstransformators derart, daß die beiden PolDM-Kanäle auf die beiden Ausgänge eines nachgeschalteten Polarisationsstrahlteilers aufgeteilt werden. Dazu wird ein Korrelationssignal des wiedergewonnenen Taktes mit dem empfangenen Signal gebildet und dieses wird durch Einstellung des Polarisationstransformators maximiert.
Die Vorgehensweise gemäß dem Stand der Technik hat mehrere Nachteile:

Zunächst verschwindet das Korrelationsprodukt bei Vorgabe einer reinen, wechselspannungsgekoppelten Pseudozufallsfolge (eine solche war dort offensichtlich nicht gegeben) im zeitlichen Mittel, was die Regelung schwierig oder unmöglich macht.

Zur Unterscheidung der beiden PolDM-Kanäle mußten außerdem verschiedene Bitraten gewählt werden, was in der Praxis nicht gestattet ist.

Zur Regelung wurde schließlich ein Korrelationsprodukt maximiert. Wegen der hohen Anforderungen an das Nebensprechen in PolDM-Systemen wäre es aber zweckmäßiger, ein Signal zu minimieren. Beispielsweise geht bei Anwesenheit polarisationsabhängiger Dämpfung im Übertragungssystem i.a. die Orthogonalität der gesendeten Polarisationen verloren, so daß die Maximierung eines Korrelationsprodukts in solchen Fällen störendes Nebensprechen verursacht.

Zur Erhöhung der Kapazität eines optischen Übertragungssystems kann auch Polarisationsumtastung (Polarization Shift Keying, PolSK) verwendet werden.
Im Tagungsband der European Conference on Optical Communications 1994, S. 67-71 ist ein PolSK-Übertragungsystem beschrieben. Zum Empfang von PolSK gibt es auch im Tagungsband der European Conference on Optical Communications 1992, Beitrag TuA5.7 einen Beitrag über zweistufige Polarisationsumtastung. Unbekannt ist dagegen, wie die erforderliche Polarisationsregelung in einem Empfänger für mehr als zweistufige Polarisationsumtastung auszuführen ist. Einen Überblick über PolSK-Sendeformate gibt Electronics Letters, Band 26, Nr. 4, S. 244-246.

Zum Empfang von PolSK mittels Überlagerungsempfang wird z.B. im Tagungsband der European Conference on Optical Communications 1994, S. 67-71 herausgestrichen, daß eine rein elektronische Polarisationsregelung dann möglich ist, wenn die drei Stokes-Parameter S1, S2, S3 detektiert werden. Im Regelfall sind Linearkombinationen dieser Stokes-Parameter zu bilden, welche als Zeilen einer Rotationsmatrix aufgefaßt werden können. Bei Datenraten von z.B. 40 Gb/s ist die Bildung regelbarer Linearkombinationen von Signalen höchst problematisch, weil die begrenzte Bandbreite der dazu verwendeten Multiplizierer etc. Intersymbolinterferenz verursacht. Außerdem bedeutet die Bereitstellung eines Empfängers auch für einen dritten Stokes-Parameter in dem Fall, daß man nur 4stufiges PolSK durch Variation zweier Stokes-Parameter durchführt, einen unerwünschten Aufwand.
Eine optische Polarisationsregelung kann zwar zur richtigen Extraktion der modulierten Stokes-Parameter benutzt werden, doch eine Regelungeinrichtung für den Fall, daß mehr als 2stufiges PolSK vorliegt, wurde noch nicht beschrieben.

Aufgabe der Erfindung ist es daher, Empfänger für die optische Informationsübertragung mittels Polarisationsmultiplex/Polarisationsumtastung anzugeben, welche die Nachteile des Standes der Technik möglichst vermeiden.

Diese Aufgabe wird durch ein in Anspruch 1 angegebenes Verfahren gelöst. Im unabhängigen Patentanspruch 11 wird ein geeigneter Empfänger angegeben.

Vorteilhafte Weiterbildungen sind in den Unteransprüchen angegeben.

Die Lösung des Problems liegt in der Bildung von Korrelationsprodukten zwischen Daten am Entscheiderausgang eines Empfängerkanals und Daten am Entscheidereingang eines Empfängerkanals. Diese Korrelationsprodukte, genauer gesagt, ihre Beträge, werden durch Polarisationsregler minimiert, sofern die jeweiligen Korrelationsmultiplikanden verschiedenen Empfängerkanälen entstammen, oder maximiert, sofern die jeweiligen Korrelationsmultiplikanden denselben Empfängerkanälen entstammen, so daß wenigstens näherungsweise Nebensprechen bei Polarisationsmultiplex (PolDM) und bei mehrstufiger Polarisationsumtastung (PolSK) minimiert und gleichzeitig die Nutzsignale maximiert werden. Einige und in bestimmten Ausführungsbeispielen sogar alle genannten Nachteile des Standes der Technik werden dabei vermieden.

In einem Ausführungsbeispiel der Erfindung besteht der PolDM-Empfänger aus einer eingangsseitigen Polarisationsregelung, einem Separator/Detektor für PolDM-Signale, bestehend aus einem Polarisationsstrahlteiler und an dessen beiden Ausgängen je einer Photodiode, und schließlich den Photodioden nachgeschalteten elektrischen Datensignalregeneratoren. Es sind Korrelatoren vorgesehen, welche Korrelationssignale zwischen jeweils einem Signal am Ausgang des Entscheiders eines Regenerators und dem Signal am Eingang des anderen Regenerators gebildet werden. Diese Korrelationssignale verschwinden nur dann, wenn ein Signal am Regeneratoreingang nicht gleichzeitig einen Anteil des vom anderen Regenerator zu regenerierenden Signals enthält. Durch eine Regeleinrichtung wird der Polarisationsregler so gesteuert, daß beide Korrelationssignale verschwinden. In diesem Fall empfängt und regeneriert jeder der Regeneratoren nur einen PolDM-Kanal, was der gewünschten empfängerseitigen Trennung der Signale entspricht.

In einem weiteren Ausführungsbeispiel der Erfindung wird ein Empfänger zum Empfang von 8stufigem PolSK mit Umtastung dreier Stokes-Parameter verwendet. Drei nachgeschaltete elektrische Datensignalregeneratoren sind wiederum mit Korrelatoren ausgestattet, welche Korrelationssignale zwischen jeweils einem Signal am Ausgang des Entscheiders eines Regenerators und dem Signal am Eingang eines anderen Regenerators gebildet werden. Diese Korrelationssignale verschwinden nur dann, wenn ein Signal am Regeneratoreingang nicht gleichzeitig einen Anteil eines von einem anderen Regenerator zu regenerierenden Signals enthält. Auch hier werden eine oder mehrere eingangsseitige Polarisationsregelungen so angesteuert, daß die Korrelationssignale verschwinden und die gewünschte empfängerseitige Trennung der Signale ausgeführt wird.

Statt solcher Minimierung von Kreuzkorrelationsprodukten können in obengenannten Ausführungsbeispielen auch Autokorrelationsprodukte maximiert werden. Weitere Ausführungsbeispiele der Erfindung betreffen vierstufige PolSK und die Ergänzung einer Polarisationsregelung durch einen Kompensator von Polarisationsmodendispersion.

Die Erfindung wird anhand von Ausführungsbeispielen näher erläutert.

Es zeigen
- Figur 1: den prinzipiellen Aufbau eines Übertragungssystems mit Polarisationsmultiplex,
- Figur 2: einen erfindungsgemäßen Empfänger,
- Figur 3: einen Separator/Detektor für PolSK-Signale,
- Figur 4: ein Vektordiagramm linearer Polarisationszustände,
- Figur 5: eine Ausführungsvariante eines Teils des Separators/Detektors,
- Figur 6: einen Separator/Detektor für PolDM-Signale,
- Figur 7: einen weiteren Separator/Detektor für PolDM-Signale,
- Figur 8: eine Ausführungsvariante eines erfindungsgemäßen Empfängers.

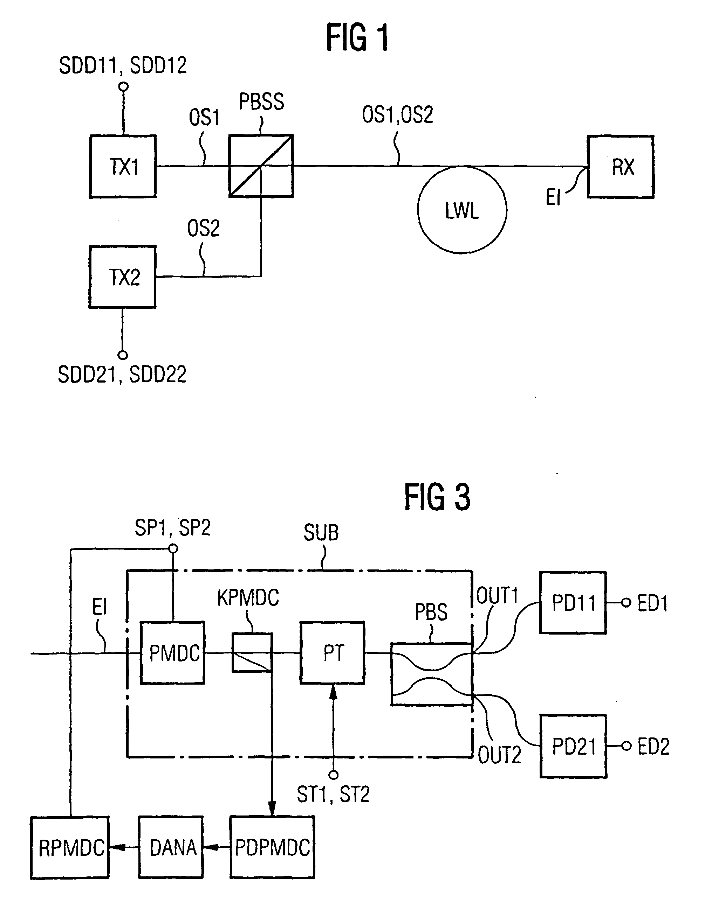

**Figur 1** zeigt den prinzipiellen Aufbau eines Übertragungssystems mit Polarisationsmultiplex (PolDM).
Sendeseitig sind zwei optische Sender TX1, TX2 vorhanden, welche orthogonal polarisierte optische Signale OS1, OS2 aussenden. Diese werden in einem sendeseitigen Polarisationsstrahlteiler PBSS kombiniert und können anschließend über einen Lichtwellenleiter LWL zu einem Empfänger RX mit einem Eingang EI übertragen werden. Da der Lichtwellenleiter i.a. nicht polarisationserhaltend ist, ergibt sich die Schwierigkeit, die beiden Signale OS1, OS2 wieder zu trennen. Statt des sendeseitigen Polarisationsstrahlteilers PBSS kann auch ein einfacher optischer Richtkoppler verwendet werden, was allerdings zu einem Leistungsverlust und schlechter definierter Orthogonalität der Signale OS1, OS2 führt. Die optischen Sender werden mit Datensignalen SDD11 und ggf. SDD12 für den Sender TX1, und SDD21, und ggf. SDD22 für den Sender TX2 moduliert.

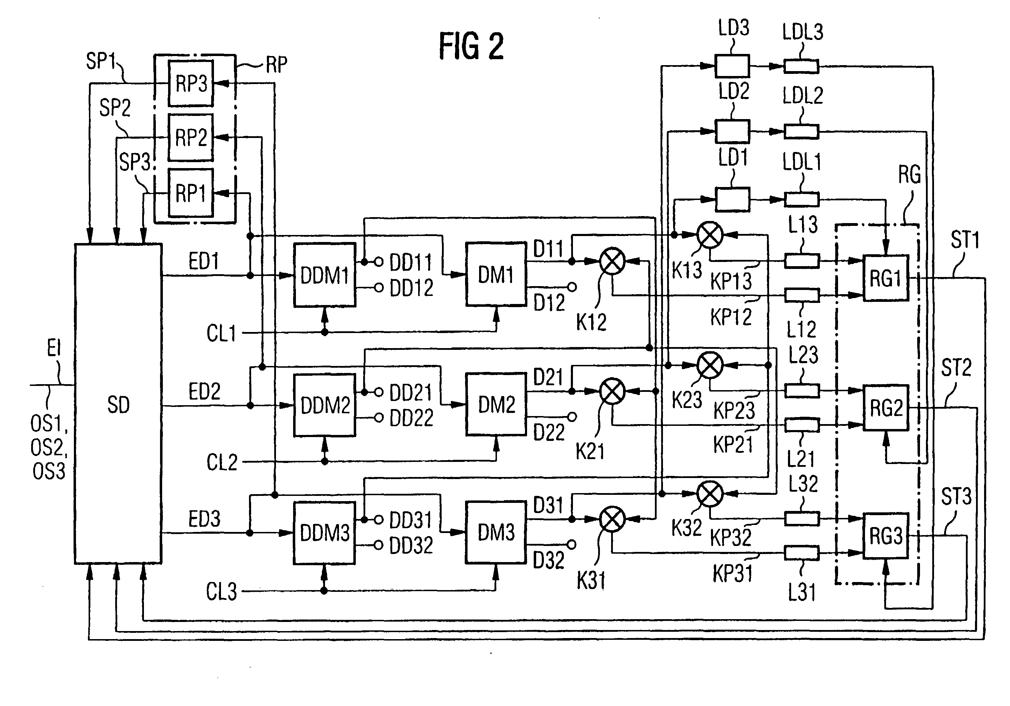

Gemäß **Figur 2** besteht der Empfänger RX hier aus einem Separator/Detektor SD und nachgeschalteter Empfängerelektronik. Wie jeder Empfänger für Signale mit Polariationsmultiplex oder Polarisationsumtastung besteht der Empfänger RX seinerseits aus mehreren Empfängern RX1, RX2, RX3, die jedoch erfindungsgemäß durch weitere Baugruppen ergänzt werden. Die Komponenten mit einer "3" im Bezeichner und die dazugehörigen Leitungen und Signale werden hier nicht, sondern erst in einem späteren Ausführungsbeispiel benötigt.

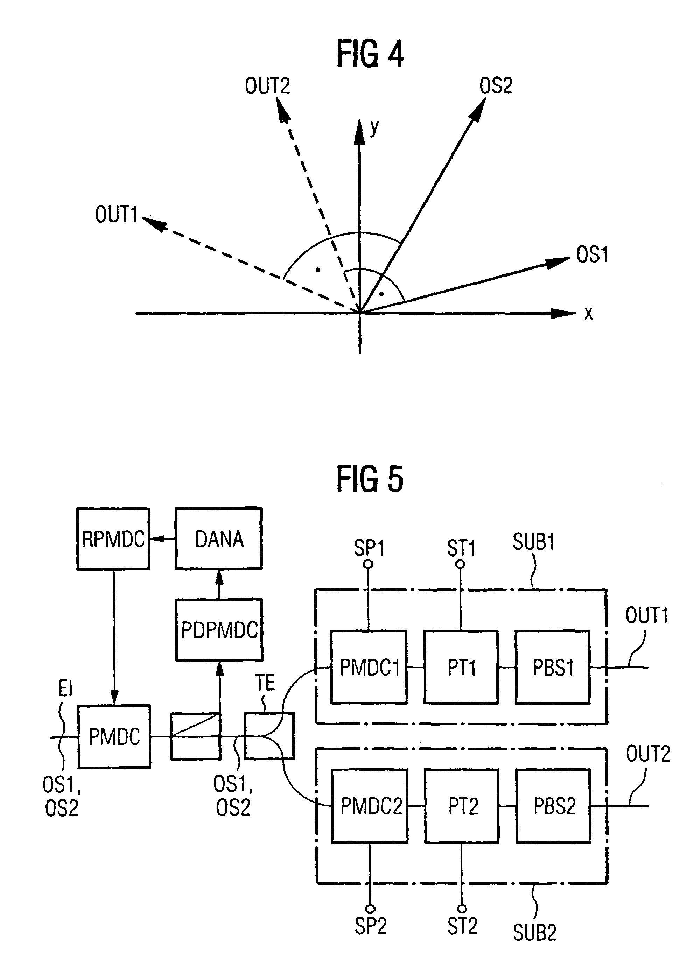

Der Separator/Detektor SD für Polarisationsmultiplex ist in **Figur 3** gezeichnet. Komponenten KPMDC und PMDC werden zunächst durch Durchverbindungen ersetzt; PDPMDC, DANA und RPMDC entfallen ebenfalls. Das empfangene optische Signal wird vom Eingang EI einem endlosen Polarisationstransformator PT zugeleitet, welcher Steuersignale ST1, ST2 empfängt. An seinem Ausgang ist ein Polarisationsstrahlteiler PBS angebracht, welcher orthogonal polarisierte Signalanteile an seinen Ausgängen OUT1, OUT2 zur Verfügung stellt. Die Ausgangssignale OUT1, OUT2 sollen im Idealfall die orthogonal polarisierten Signale OS1 bzw. OS2 sein; sie tun dies jedoch nur bei geeigneter Einstellung von PT und eines ggf. vorgeschalteten Kompensators von Polarisationsmodendispersion PMDC. Die Signale OUT1, OUT2 werden in Photodioden PD11, PD21 detektiert, welche elektrische detektierte Signale ED1, ED2 erzeugen.

Da PolDM ein mehrstufiges Modulationsverfahren ist, reagiert es empfindlich auf Einflüsse wie Polarisationsmodendispersion (PMD). In solchen Fällen kann es zweckmäßig sein, einen PMD-Kompensator PMDC wie z.B. in den deutschen Patenanmeldungen 19841755.1 und 19830990.2 beschrieben vor dem Polarisationstransformator PT vorzusehen. In Figur 3 ist mit dem Eingang EI der Empfangseinrichtung RX ein stilisierter Lithiumniobatchip SUB verbunden, welcher PMD-Kompensator PMDC, Polarisationstransformator PT und Polarisationsstrahlteiler PBS integriert. Statt des integrierten Aufbaus könnten beispielsweise auch der PMD-Kompensator PMDC weggelassen und Polarisationstransformator PT und Polarisationsstrahlteiler PBS wie im Tagungsband der European Conference on Optical Communications 1993, Montreux, Schweiz, S. 401-404, Beitrag WeP9.3 beschrieben aufgebaut werden. Auch Ausführungsformen gemäß denen in den deutschen Patentanmeldungen 19858148.3, 19919576.5 sind möglich.

Für 40Gb/s-Betrieb werden elektrische detektierte Signale ED1, ED2 1:2-Demultiplexer-Entscheidern DDM1, DDM2 zugeleitet, welche eine Entscheiderfunktion besitzen, gleichzeitig aber auf die halbe Datenrate heruntermultiplexen. Solche Schaltungen sind aus dem International J. of High Speed Electronics and Systems, Band 9, 1998, No. 2 (H.-M. Rein, "Si and SiGe bipolar ICs for 10 to 40 Gb/s optical-fiber TDM links") bekannt.

Die Signale ED1, ED2 werden auch analogen 1:2-Demultiplexern DM1, DM2 ohne Entscheiderfunktion zugeleitet. Es ist hier von Bedeutung, daß die Demultiplexer DM1, DM2 keine Entscheiderfunktion besitzen, also im wesentlichen linear arbeiten und demnach an ihren Ausgängen Analogsignale D11, D12, D21, D22 zur Verfügung stellen. Es ist zweckmäßig, die erforderlichen Taktsignale CL1, CL2 für den Betrieb der Demultiplexer DM1, DM2 jeweils einer gemeinsamen Quelle zu entnehmen. Es ist auch möglich, die Taktsignale CL1 und CL2 unterschiedlichen Quellen zu entnehmen.

Analogsignal D11 an einem Ausgang des Demultiplexers DM1 wird mit Signal DD21 am entsprechenden Ausgang von Demultiplexer-Entscheider DDM2 in einem Korrelator K12 korreliert. Das Korrelationsprodukt KP12 wird in einem Tiefpaßfilter L12 tiefpaßgefiltert und einem Regler RG1 zugeleitet, welcher ein oder mehrere Stellsignale ST1 erzeugt.

Analogsignal D21 an einem Ausgang des Demultiplexers DM2 wird mit Signal DD11 am entsprechenden Ausgang von Demultiplexer-Entscheider DDM1 in einem Korrelator K21 korreliert. Das Korrelationsprodukt KP21 wird in einem Tiefpaßfilter L21 tiefpaßgefiltert und einem Regler RG2 zugeleitet, welcher ein oder mehrere Stellsignale ST2 erzeugt.

Damit die Regeleinrichtung wie beschrieben funktioniert, muß in derselben Taktperiode, in welcher Demultiplexer-Entscheider DDM1 das Signal DD11 erzeugt, auch Demultiplexer DM2 das Signal DM21 erzeugen. Ähnliches gilt für die anderen Korrelation. Dies kann durch synchronisierte Taktsignale und Laufzeitabgleich mittels kurzer Leitungsstücke gewährleistet werden.

Die Korrelatoren K12, K21 können als Exklusiv-Oder-Gatter oder als Multiplizierer ausgeführt sein. Zusätzlich zu oder anstelle der Korrelatoren K12, K21 können weitere Korrelatoren die Korrelationsprodukte zwischen den Signalen DD12 und D22 sowie zwischen den Signalen DD22 und D12 bilden. Im Prinzip reicht aber bereits ein solcher Korrelator K12 aus; zur besseren Unterdrückung der Auswirkungen etwaiger polarisationsabhängiger Dämpfung oder realisierungsbedingter Störungen ist es aber vorteilhaft, mindestens zwei Korrelatoren K12, K21, die von Entscheiderausgangssignalen DD11, DD21 und Analogsignalen D21, D11 beider Empfänger RX1, RX2 optischer Teilsignale OS1, OS2 gespeist werden, vorzusehen.

Die Analogsignale D21, D11 sind nicht die Eingangssignale eines Entscheiders. Sie entsprechen jedoch gerade denjenigen Signalen, die sich ergäben, wenn die Entscheidung nicht in den Demultiplexer-Entscheidern DDM1, DDM2, sondern durch an den Ausgängen der Demultiplexer DM1, DM2 angeordnete Entscheider durchgeführt würden. Die letztere, an sich logischer erscheinende Variante ist ebenfalls möglich.

Die Regler RG1, RG2 können auch zu einem gemeinsamen Regler RG zusammengefaßt werden. Die Stellsignale ST1, ST2 werden zum Separator/Detektor SD geleitet, wo sie den Polarisationstransformator PT steuern.

Die Regler RG1, RG2, RG besitzen vorzugsweise Integral- oder Proportional-Integral-Regelglieder und sorgen daher dafür, daß die zeitlichen Mittelwerte ihrer Eingangssignale zumindest näherungsweise verschwinden. Dies bedeutet, daß zwischen den analogen, noch keiner Entscheidung zugeführten Signalen D11, D21 und den digitalen, aus einer Entscheidung herrührenden Signalen DD21, DD11 des jeweils anderen Empfängerteils keine Korrelation besteht. Fehlende Korrelation bedeutet Abwesenheit von Nebensprechen. In vorteilhafter Weise wird deshalb der Polarisationstransformator PT so eingestellt, daß an den Ausgängen des Empfängers RX1 Signale DD11, DD21 optimaler Qualität und niedrigster Bitfehlerquoten zur Verfügung stehen. Dies gilt auch für die Signale DD12, DD22 der Ausgänge des Empfängers RX2. Diese Signale entsprechen den durch ein vorangestelltes "S" gekennzeichneten sendeseitigen Modulationssignalen SDD11, SDD12, SDD21, SDD22.

Eine Vereinfachung ist dann möglich, wenn bei verbesserter Halbleitertechnologie oder niedrigerer Bitrate Entscheidungen mit der vollen Bittaktfrequenz vorgenommen werden können. In diesem Fall besitzen die Baugruppen DDM1, DDM2 keinen zweiten Ausgang und sind lediglich Entscheider. Die Baugruppen DM1, DM2 können fortgelassen werden, so daß die Analogsignale D11, D21 den Signalen ED1, ED2 entsprechen.

Zusätzliche Gütesignalgewinner und Regler RP1, RP2, RP3, welche auch zu einer gemeinsamen Baugruppe RP zusammengefaßt werden können und welche mindestens ein Stellsignal SP1, SP2, SP3 erzeugen, können wie in den Proc. 9th European Conference on Integrated Optics (ECIO'99), April 14-16, 1999, Turin, I-talien, postdeadline-paper-Band, S. 17-19 (D. Sandel et al., "Integrated-optical polarization mode dispersion compensation for 6-ps, 40-Gb/s pulses") beschrieben zur Regelung des PMD-Kompensators PMDC eingesetzt werden.

Der Polarisationstransformator PT ist prinzipiell ebenso aufgebaut wie der PMD-Kompensator PMDC, welcher in der gerade genannten Literaturstelle näher beschrieben ist und einfach die Kaskade mehrerer Modenwandler als Polarisationstransformatoren darstellt. Die Steuersignale des Reglers RG werden dem Polarisationstransformator PT zugeführt, während die Steuersignale des Reglers RP dem PMD-Kompensator PMDC zugeführt werden.

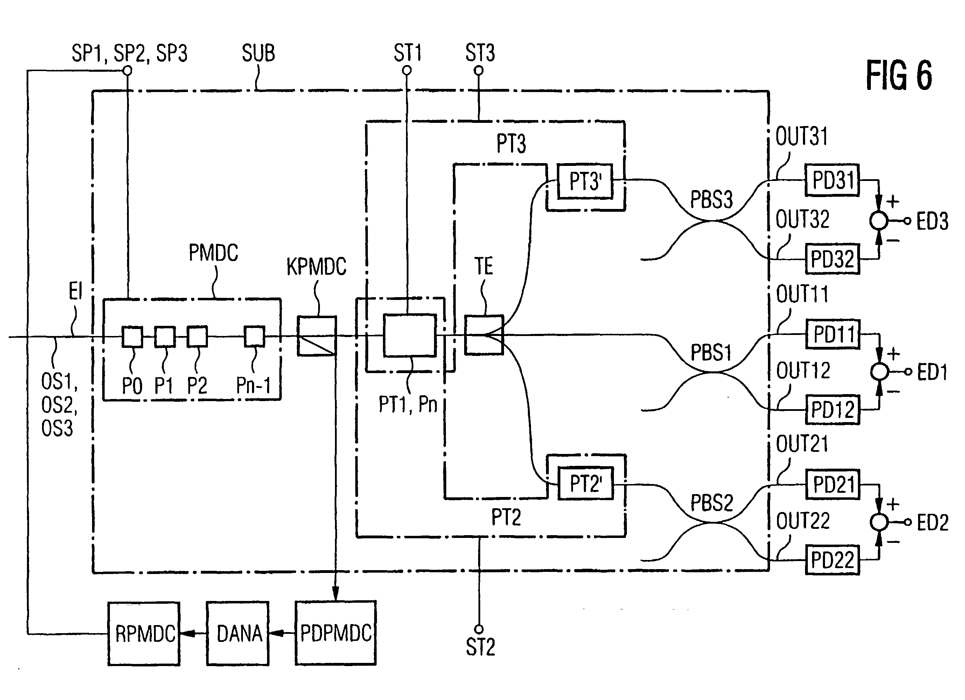

Durch sendeseitiges nichtideales Multiplex im sendeseitigen Polarisationsstrahlteiler PBSS, oder durch polarisationsabhängige Dämpfung oder Verstärkung im Lichtwellenleiter LWL kann es zu reduzierter Orthogonalität der empfangenen optischen Signale OS1, OS2 kommen. Gemäß Figur 4 und Figur 5 ist es in solchen Fällen günstig, nach Durchlaufen eines Leistungsteilers TE je einen Polarisationstransformator PT1, PT2 mit ggf. vorgeschaltetem PMD-Kompensator PMDC1, PMDC2 und nachgeschaltetem Polarisationsstrahlteiler oder Polarisator PBS1, PBS2 einzusetzen. Für den Fall linearer Polarisationen sind die durch das Ausführungsbeispiel der Figur 5 erfindungsgemäß erreichten Polarisationsanpassungen in Figur 4 skizziert; in Figur 5 werden Komponenten KPMDC und PMDC zunächst durch Durchverbindungen ersetzt und PDPMDC, DANA und RPMDC entfallen ebenfalls. Die empfangenen Signale OS1, OS2 sind nicht orthogonal zueinander polarisiert. Das Signal OUT1, welches durch PBS1 transmittiert wird, ist jedoch orthogonal zu OS2, und OUT2, welches durch PBS2 transmittiert wird, ist orthogonal zu OS1. Daß OS1 nicht identisch mit OUT1 polarisiert ist und OS2 nicht identisch mit OUT2 polarisiert ist, führt zwar zu einem gewissen Signalverlust, der jedoch leichter zu ertragen ist als ein starkes Nebensprechen, welches sich dann ergäbe, wenn man OS1 identisch mit OUT1 und OS2 identisch mit OUT2 machte.

Weitere Ausführungsbeispiele sind auch durch Korrelation zwischen zwei Analogsignalen D11, D21 möglich.

Schließlich können durch Messung der Leistungen der Signale ED1, ED2 Signale gewonnen werden, welche zur Überprüfung und ggf. (langsamen) Nachregelung oder gezielten Vorverzerrung der sendeseitigen Polarisationsorthogonalität verwendet werden. Dies ermöglicht die Optimierung des Übertragungssystems derart, daß beispielsweise polarisationsabhängige Dämpfung des Lichtwellenleiters nicht nur nicht zu Nebensprechen führt, sondern auch zu keiner Benachteiligung eines der optischen Signale OS1, OS2 gegenüber dem anderen.

Während bisher Ausführungsbeispiele der Erfindung für PolDM-Signale beschrieben wurden, sollen jetzt Ausführungsbeispiele für PolSK-Signale beschrieben werden. Der Empfänger der Figur 2, diesmal inklusive Baugruppen und Signalen, welche den Index "3" tragen, ist auch zum Empfang von 8stufigem PolSK mit Umtastung dreier Stokes-Parameter geeignet, wenn der Separator/Detektor SD beispielsweise gemäß Figur 6 ausgeführt wird. Komponenten KPMDC und PMDC werden zunächst durch Durchverbindungen ersetzt; PDPMDC, DANA und RPMDC entfallen ebenfalls. Gemäß Stand der Technik seien die Modulationszustände die Ecken eines der Poincare-Kugel einbeschriebenen Würfels. Zu detektierende Teilsignale des gesamten optischen Signals seien die Signale OS1, OS2, OS3, die am Eingang EI des Bausteins auftreten. Auf einen gemeinsamen optionalen PMD-Kompensator PMDC folgt ein endloser Polarisationstransformator PT1, gleichzeitig Teile der Funktionen der Polarisationstransformatoren PT2, PT3 beinhaltet. Ein Leistungsteiler TE teilt das Signal auf drei Kanäle auf, die jeweils Polarisationsstrahlteiler PBS1, PBS2, PBS3 enthalten. In zweien dieser Kanäle sind jedoch weitere Polarisationstransformatoren PT2', PT3' erforderlich, welche Teile von der Polarisationstransformatoren PT2, PT3 sind. An den Ausgängen OUT11, OUT12, OUT21, OUT22, OUT31, OUT32 der Polarisationsstrahlteiler sind Photodioden PD11, PD12, PD21, PD22, PD31, PD32 angeschlossen, deren Ausgangssignale mittels Subtrahierern SU1, SU2, SU3 zu elektrischen detektierten Signalen ED1, ED2, ED3 weiterverarbeitet werden.

Erfindungsgemäß erfolgt die Einregelung der Polarisationstransformatoren PT1, PT2, PT3 durch Betragsminimierung der mit Hilfe von Tiefpaßfiltern L11, L12, L21, L22, L31, L32 gebildeten zeitlichen Mittelwerte der durch Korrelatoren K12, K23, K31, K21, K32 und K13 gebildeten Korrelationsprodukte K12, K23, K31, K21, K32 und K13.

Solange die Polarisationstransformatoren PT1, PT2, PT3 noch nicht eingeregelt sind, ergeben sich als elektrische detektierte Signale ED1, ED2, ED3 jeweils elektrische Detektionssignale, welche Linearkombinationen der Stokes-Parameter S1, S2, S3 des empfangenen optischen Signals am Eingang EI sind. Durch Einstellung der Polarisationstransformatoren können diese Linearkombination gerade so gestaltet werden, daß jeweils das gewünschte Teilsignal, z.B. OS1 mit horizontaler/vertikaler Polarisation für ED1 durch Einstellung von PT1, OS2 mit linearer Polarisation mit ±45° Erhebungswinkel für ED2 durch Einstellung von PT2 und OS3 mit rechts- /linkszirkularer Polarisation für ED3 durch Einstellung von PT3, detektiert wird. Perfekte Polarisationsorthogonalität vorausgesetzt, können die Baugruppen PT2' und PT3' feste Polarisationstransformatoren sein. Im gerade genannten Beispiel muß Polarisationstransformator PT2' ein linear mit 45° oder -45° Erhebungswinkel polarisiertes Signal am dem Leistungsteiler TE zugewendeten Ausgang des Polarisationstransformators PT1 in ein horizontal oder vertikal polarisiertes Signal am dem Polarisationsstrahlteiler PBS2 zugewandten Ausgang dieses Polarisationstransformators PT2' umwandeln. Ebenso muß Polarisationstransformator PT3' ein rechts- oder linkszirkular polarisiertes Signal am dem Leistungsteiler TE zugewendeten Ausgang des Polarisationstransformators PT1 in ein horizontal oder vertikal polarisiertes Signal am dem Polarisationsstrahlteiler PBS3 zugewandten Ausgang dieses Polarisationstransformators PT3' umwandeln. Die Polarisationsstrahlteiler PBS1, PBS2, PBS3 separieren nämlich diese horizontal oder vertikal polarisierten Signale.

In diesem Fall reicht es auch aus, zwei Korrelatoren einzusetzen. Mit Bezug auf Figur 2 dürfen dies aber nicht solche Korrelatoren sein, die bei Vertauschung der Indizes identisch sind. Beispielsweise dürfen in diesem Fall die Korrelatoren K12 und K13 ausgewählt werden. Sinnvoller ist es aber auch in einem solchen Spezialfall, mindestens drei Korrelatoren, z.B. K12, K23 und K31 oder besser noch die gezeichneten 6 Korrelatoren K12, K23, K31, K21, K32 und K13 einzusetzen.

Eine platzsparende Integration der optischen Komponenten auf einem Lithiumniobatsubstrat SUB mit X-Schnitt und Y-Ausbreitung läßt sich ebenfalls anhand Figur 6 erläutern: Gemäß der Offenbarung in den deutschen Patentanmeldungen 198 58 148.3, 199 19 576.5 besteht der PMD-Kompensator PMDC aus Modenwandlern Pa zur Vermeidung von Gleichspannungsdrift und zur eigentlichen PMD-Kompensation vorgesehenen Modenwandlern P1 ... Pn-1. Letztere können bei Verzicht auf PMD-Kompensation auch fortgelassen werden. Polarisationstransformator PT1 besteht aus einem letzten Modenwandler Pn. Polarisationstransformatoren PT2' und PT3' sind ebenfalls jeweils Modenwandler. Alle diese Modenwandler sind gemäß IEEE Journal of Quantum Electronics, Vol. QE-18, Nr. 4, April 1982, Seite 767 bis 771 ausgeführt. Modenwandler Pa erhält Sinus- und Cosinussignale mit einer halbierten niedrigen Kreisfrequenz Ω/2, Modenwandler P1 ... Pn sowie PT2' und PT3' erhalten Sinus- und Kosinussignale mit der Kreisfrequenz Ω. Polarisationstransformatoren PT2' und PT3' sind entweder um ein ungeradzahliges Viertel einer Schwebungswellenlänge als optische Weglänge versetzt angebracht (d.h., die optischen Weglängen und, bei gleichartiger Beschaffung der Wellenleiter auch die Abstände der Eingänge der Polarisationstransformatoren PT2' und PT3' vom Signalverzweigungspunkt innerhalb des Leistungsteilers TE unterscheiden sich um ein Viertel einer Schwebungswellenlänge), oder die Signale in PT2' und PT3' sind um näherungsweise 90° gegeneinander versetzt. Bei eingeschränkter Modulationssignalsorthogonalität im Stokes-Raum können optischer Weglängenunterschied oder dieser Phasenwinkelversatz u.U. etwas anders gewählt werden. Die beiden Polarisationstransformatoren PT2' und PT3' führen (im Idealfall vollständiger Modulationssignalsorthogonalität im Stokes-Raum) jeweils hälftige Modenkonversion (oder -rückkonversion) durch, bei eingeschränkter Modulationssignalsorthogonalität u.U. etwas größere oder kleinere. Wenn Polarisationstransformator PT2' 45°-Polarisation in TE-Polarisation umwandelt, dann tut dies Polarisationstransformator PT3' für zirkulare, so daß die TE-TM-Polarisationsstrahlteiler PBS1, PBS2, PBS3 die gewünschten Signale erhalten.

Beim im Ausnahmefall auftretenden Ausfall eines oder mehrerer der drei Empfangsteilsignale OS1, OS2, OS3 oder Teile RX1, RX2, RX3 des Empfängers können die Informationen der von diesem Ausfall betroffenen Korrelatoren fortgelassen werden und es kann auf eine Polarisationsregelung übergegangen werden, welche das Korrelationsprodukt zwischen den Signalen DDij und Dij (i = 1 ... 3, j = 1 ... 2) maximiert. Analoges gilt auch für Signale mit PolDM.

Läßt man in Figur 2 und 6 die Komponenten mit einer bestimmten Zahl zwischen 1 und 3 im Bezeichner, z.B. "2" oder "1" weg, allerdings ohne Berücksichtigung eventuell vorhandener Modenwandler P1 ... Pn, und bei den Photodioden PD11 ... PD32 und Polarisationsstrahlteilerausgängen OUT11 ... OUT32 nur diejenigen, welche diese Zahl als erste der Zahlen im Bezeichner tragen, und läßt auch die dazugehörigen Leitungen und Signale weg, so erhält man einen Empfänger für 4stufiges PolSK mit Modulation zweier Stokes-Parameter. Die Modulationszustände sind beispielsweise die Ecken eines einem Großkreis der Poincaré-Kugel einbeschriebenen Quadrats.

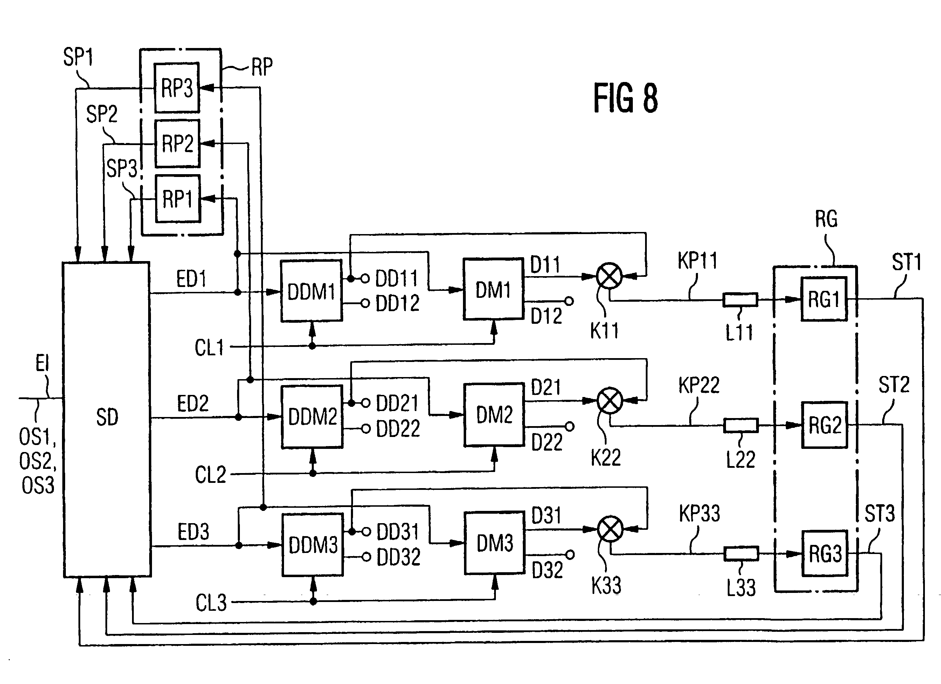

In diesem Fall ergibt sich die Besonderheit, daß Nebensprechfreiheit der beiden Kanäle noch nicht automatisch maximale Nutzsignale in diesen zwei Kanälen bewirken. Dieses Manko läßt sich einfach dadurch beheben, daß zusätzlich zu der beschriebenen Minimierung von Korrelationsprodukten auch eine Maximierung der Leistungen der Nutzsignale durchgeführt wird. Eine solche Maximierung eines Nutzsignals zum Zweck der Polarisationsregelung ist schon aus Electron. Lett. 22(1986)15, S. 772-773 bekannt. Es müssen also die Leistungen der zwei vorhandenen der drei Signale ED1, ED2, ED3 maximiert werden. Dies ist in Figur 2 dadurch berücksichtigt, daß Leistungsdetektoren LD1, LD2, LD3 vorhanden sind, welche die Leistungen der aus den Signalen ED1, ED2, ED3 gewonnenen oder mit diesen Signalen ED1, ED2, ED3 identischen Signale D11, D21, D31 detektieren. Nach Filterung durch Tiefpaßfilter LDL1, LDL2, LDL3 werden die Ausgangssignale der Leistungsdetektoren LD1, LD2, LD3 den Reglern RG1, RG2, RG3, welche Teil des Reglers RG sind, zugeführt und beeinflussen dort die Steuersignale ST1, ST2, ST3 im Sinne einer Maximierung der Signale D11, D21, D31, ED1, ED2, ED3. Wie im vorhergehenden Absatz beschrieben, fallen in Figur 2 und deshalb auch in diesem Absatz die Komponenten mit einer bestimmten Zahl zwischen 1 und 3 im Bezeichner weg, da das Ausführungsbeispiel einen Empfänger für 4stufiges PolSK mit Modulation zweier Stokes-Parameter betrifft.
Zur Vermeidung polarisationsabhängiger Verluste im Leistungsteiler TE im Falle seiner Ausführung als Teil eines integriert-optischen Bauteils kann es zweckmäßig sein, diesen schon vor den Polarisationstransformatoren PT1, PT2, PT3 und ggf. PMD-Kompensatoren PMDC1, PMDC2, PMDC3 anzuordnen und beispielsweise als faseroptischen Koppler mit gleichmäßiger Aufteilung des Eingangssignals auf drei Ausgangsarme auszuführen. Dies ist in Figur 7 gezeigt. Diese Anordnung ähnelt der in Figur 5 dargestellten, besitzt jedoch drei Kanäle für Ausgangssignale und verwendet jeweils beide Ausgänge OUT11, OUT12, OUT21, OUT22, OUT31, OUT32 der Polarisationsstrahlteiler PBS1, PBS2, PBS3.

Die bisher für Polarisationsmultiplex und für Polarisationsumtastung beschriebene Minimierung von Korrelationssignalen zwischen zwischen Daten am Entscheiderausgang eines Empfängerkanals und Daten am Entscheidereingang eines anderen Empfängerkanals besitzt den Vorteil, daß sie durch Rauschen vergleichsweise wenig beeinflußt wird und daß Abweichungen von der Orthogonalität der Multiplex-Polarisationen sowie Abweichungen der Orthogonalität von Basisvektoren umgetasteter Polarisationen im Stokes-Raum vergleichsweise gut toleriert werden können. Das erfindungsgemäße Prinzip, Korrelationsprodukte zwischen Daten am Entscheiderausgang eines Empfängerkanals und Daten am Entscheidereingang eines Empfängerkanals zu bilden, läßt stattdessen auch die Bildung von Korrelationssignalen zwischen zwischen Daten am Entscheiderausgang eines Empfängerkanals und Daten am Entscheidereingang desselben Empfängerkanals. Solche Korrelationssignale sind durch Regler RG1, RG2, RG3, RG zu maximieren, nicht zu minimieren. Ein Ausführungsbeispiel der Figur 8 ist funktional weitgehend identisch mit Figur 2, unterscheidet sich jedoch in Anzahl und Anschluß der Korrelatoren. Statt der Korrelatoren Kij (i≠j), welche an Signale Di1 und DDj1 angeschlossen sind und Tiefpaßfilter Lij (i≠j) sind nun Korrelatoren Kii (i = 1...3) vorgesehen, welche an Signale Di1 und DDil angeschlossen sind, sowie (zwecks konsistenter Nomenklatur) dazugehörige Tiefpaßfilter Lii (i = 1...3). Deren Ausgangssignale werden in den Reglern RG1, RG2, RG3, RG maximiert. Leistungsdetektoren LDi und dazugehörige Tiefpaßfilter LDLi (i = 1...3) sind auch weggelassen, da sie durch die Korrelatoren Kii überflüssig werden. Die übrigen im Zusammenhang mit Figur 2 genannten Punkte (Weglassen eines von 3 Empfängerzweigen für 4stufige Polarisationsumtastung oder Polarisationsmultiplex) behalten ihre Gültigkeit.

Weitere Ausführungsbeispiele der Erfindung betreffen die Kombination mit Verfahren und Einrichtungen zur Kompensation von Polarisationsmodendispersion (PMD). Minimaler optischer Aufwand ergibt sich, wenn die Regelsignale für PMDC in Figuren 3 und 6 aus den beiden elektrischen Empfangssignalen ED1 und ED2 abgeleitet werden. Nachteilig ist hierbei, daß sich auch die Einstellungen von PT, PT1, PT2, PT3 auf die PMD-Kompensation auswirken können.
Dies kann vermieden werden, wenn vor Erreichen der polarisierenden Elemente PBS, PBS1, PBS2, PBS3 ein optisches Signal abgezweigt und detektiert wird. Aus diesem werden dann PMD-Verzerrungen analysiert und durch Einstellung von PMDC, PMDC1, PMDC2 minimiert. Zu diesem Zweck sind in Figuren 3, 5 und 6 jeweils ein Koppler KPMDC, ein daran angeschlossener Photodetektor PDPMDC, ein Verzerrungsanalysator DANA und ein Regler RPMDC, in Figur 5 auch ein PMD-Kompensator PMDC vorgesehen. In den bisher in Zusammenhang mit Figuren 3, 5 und 6 beschriebenen Ausführungsbeispielen entfallen diese Komponenten dagegen bzw. werden im Fall von KPMDC sowie PMDC von Figur 5 durch Durchverbindungen ersetzt. Hingegen können nun PMDC1 und PMDC2 von Figur 5 entfallen, d.h. durch Durchverbindungen ersetzt werden. Diese Art der PMD-Kompensation ist zwar prinzipiell schon bekannt, beispielsweise aus der europäischen Patentanmeldung EP 0 909 045 A2 und aus IEEE J. Lightwave Technology, 17(1999)9, S. 1602-1616; neu ist jedoch ihre Anwendung auf Polarisationsmultiplexsignale.

Bei vorliegender Anmeldung liegt der erfinderische Gedanke in der Korrelation. Da Korrelation wie oben beschrieben, stets auftreten können, ist der Gegenstand der Erfindung sowohl für das Non-Return-to-Zero- Signal NRZ, als auch für das Return-to-Zero-Signalformat RZ uneingeschränkt geeignet.

## Patentansprüche

1. Verfahren zur Übertragung optischer Signale (OS1, OS2, OS3) mittels Polarisationsmultiplex oder Polarisationsumtastung, welche in Empfängern (RX1, RX2) detektiert werden,
**dadurch gekennzeichnet,**
**daß** in einem Korrelator (K11, K12, K13, K21, K22, K23, K31, K32, K33) ein Korrelationsprodukt (KP11, KP12, KP13, KP21, KP22, KP23, KP31, KP32, KP33) zwischen einem Analogsignal (D11, D21, D31) eines Empfängers (RX1, RX2, RX3) und einem Digitalsignal (DD11, DD21, DD31) eines Empfängers (RX1, RX2, RX3) gebildet wird, daß der Betrag des zeitlichen Mittelwerts dieses Korrelationsprodukts (KP11, KP12, KP13, KP21, KP22, KP23, KP31, KP32, KP33) durch einen Regler (RG1, RG2, RG3, RG), welcher einen Polarisationstransformator (PT1, PT2, PT3) steuern kann, wenigstens näherungsweise einem Extremum zugeführt wird.

2. Verfahren nach Anspruch 1,
**dadurch gekennzeichnet,**
**daß** in einem Korrelator (K12, K13, K21, K23, K31, K32) ein Korrelationsprodukt (KP11, KP12, KP21, KP22, KP31, KP32) zwischen einem Analogsignal (D11, D21, D31) eines Empfängers (RX1, RX2, RX3) und einem Digitalsignal (DD11, DD21, DD31) eines anderen Empfängers (RX1, RX2, RX3) gebildet wird, daß der Betrag des zeitlichen Mittelwerts dieses Korrelationsprodukts (KP12, KP13, KP21, KP23, KP31, KP32) durch einen Regler (RG1, RG2, RG3, RG), welcher einen Polarisationstransformator (PT1, PT2, PT3) steuern kann, wenigstens näherungsweise minimiert wird.

3. Verfahren nach Anspruch 2,
**dadurch gekennzeichnet,**
**daß** die Beträge der Mittelwerte mehrerer Korrelationsprodukte (KP12, KP13, KP21, KP23, KP31, KP32) minimiert werden.

4. Verfahren nach Anspruch 1,
**dadurch gekennzeichnet,**
**daß** in einem Korrelator (K11, K22, K33) ein Korrelationsprodukt (KP11, KP22, KP33) zwischen einem Analogsignal (D11, D21, D31) eines Empfängers (RX1, RX2, RX3) und einem Digitalsignal (DD11, DD21, DD31) desselben Empfängers (RX1, RX2, RX3) gebildet wird, daß der Betrag des zeitlichen Mittelwerts dieses Korrelationsprodukts (KP11, KP22, KP33) durch einen Regler (RG1, RG2, RG3, RG), welcher einen Polarisationstransformator (PT1, PT2, PT3) steuern kann, wenigstens näherungsweise maximiert wird.

5. Verfahren nach Anspruch 4,
**dadurch gekennzeichnet,**
**daß** die Beträge der Mittelwerte mehrerer Korrelationsprodukte (KP11, KP22, KP33) maximiert werden.

6. Verfahren nach Anspruch 2 oder 3,
**dadurch gekennzeichnet,**
**daß** die Leistung mindestens eines analogen Signals (D11, D21, D31) eines Empfängers (RX1, RX2, RX3) maximiert wird.

7. Verfahren nach Anspruch 6,
**dadurch gekennzeichnet,**
**daß** die Übertragung dieser optischen Signale (OS1, OS2, OS3) durch vierstufige Polarisationsumtastung erfolgt.

8. Verfahren nach einem der Ansprüche 1 bis 7,
**dadurch gekennzeichnet,**
**daß** dieses Digitalsignal (DD11, DD21, DD31) ein Ausgangssignal eines Entscheiders (DDM1, DDM2, DDM3) ist.

9. Empfänger für optischer Signale (OS1, OS2) mit Polarisationsmultiplex oder Polarisationsumtastung mit einem einen Polarisationstransformator (PT1) enthaltenden Separator/Detektor (SD) und Empfängern (RX1, RX2),
**dadurch gekennzeichnet,**
**daß** ein Empfänger (RX1, RX2, RX3) vorhanden ist, an welchen ein Korrelator (K11, K12, K13, K21, K22, K23, K31, K32, K33) angeschlossen ist, der ein Korrelationsprodukt (KP11, KP12, KP13, KP21, KP22, KP23, KP31, KP32, KP33) zwischen einem Analogsignal (D11, D21, D31) eines dieser Empfänger (RX1, RX2, RX3) und einem Digitalsignal (DD11, DD21, DD31) eines dieser Empfänger (RX1, RX2, RX3) bilden kann,
**daß** ein Regler (RG1, RG2, RG3, RG) vorgesehen ist, welcher einen Polarisationstransformator (PT1, PT2, PT3) so steuern kann, daß der Betrag des zeitlichen Mittelwerts dieses Korrelationsprodukts (KP11, KP12, KP13, KP21, KP22, KP23, KP31, KP32, KP33) wenigstens näherungsweise einem Extremum zugeführt wird.

10. Empfänger nach Anspruch 9,
**dadurch gekennzeichnet,**
**daß** ein Empfänger (RX1, RX2, RX3) vorhanden ist, an welchen ein Korrelator (K12, K13, K21, K23, K31, K32) angeschlossen ist, der ein Korrelationsprodukt (KP12, KP13, KP21, KP23, KP31, KP32) zwischen einem Analogsignal (D11, D21, D31) eines dieser Empfänger (RX1, RX2, RX3) und einem Digitalsignal (DD11, DD21, DD31) eines dieser Empfänger (RX1, RX2, RX3) bilden kann,
**daß** ein Regler (RG1, RG2, RG3, RG) vorgesehen ist, welcher einen Polarisationstransformator (PT1, PT2, PT3) so steuern kann, daß der Betrag des zeitlichen Mittelwerts dieses Korrelationsprodukts (KP12, KP13, KP21, KP23, KP31, KP32) wenigstens näherungsweise minimiert wird.

11. Empfänger nach Anspruch 9,
**dadurch gekennzeichnet,**
**daß** ein Empfänger (RX1, RX2, RX3) vorhanden ist, an welchen ein Korrelator (K11, K22, K33) angeschlossen ist, der ein Korrelationsprodukt (KP11, KP22, KP33) zwischen einem Analogsignal (D11, D21, D31) eines dieser Empfänger (RX1, RX2, RX3) und einem Digitalsignal (DD11, DD21, DD31) eines dieser Empfänger (RX1, RX2, RX3) bilden kann,
**daß** ein Regler (RG1, RG2, RG3, RG) vorgesehen ist, welcher einen Polarisationstransformator (PT1, PT2, PT3) so steuern kann, daß der Betrag des zeitlichen Mittelwerts dieses Korrelationsprodukts (KP11, KP22, KP33) wenigstens näherungsweise maximiert wird.

12. Empfänger nach Anspruch 10,
**dadurch gekennzeichnet,**
**daß** dieser Regler (RG1, RG2, RG3, RG) einen Polarisationstransformator (PT1, PT2, PT3) so steuern kann, daß außerdem der Betrag des zeitlichen Mittelwerts der Leistung eines dieser Analogsignale (D11, D21, D31) maximiert wird.

13. Empfänger nach Anspruch 12,
**dadurch gekennzeichnet,**
**daß** zwei dieser Empfänger (RX1, RX2; oder RX1, RX3; oder RX2, RX3) vorgesehen sind, welche durch vierstufige Polarisationsumtastung übertragene optische Signale (OS1, OS2, OS3) empfangen.

14. Empfänger nach einem der Ansprüche 9 bis 13,
**dadurch gekennzeichnet,**
**daß** ein Entscheider (DDM1, DDM2, DDM3) vorhanden ist, welcher dieses Digitalsignal (DD11, DD21, DD31) erzeugen kann.

15. Empfänger nach einem der Ansprüche 9 bis 14,
**dadurch gekennzeichnet,**
**daß** einer dieser Entscheider (DDM1, DDM2, DDM3) gleichzeitig ein Demultiplexer ist und daß ein analoger Demultiplexer (DM1, DM2, DM3) vorhanden ist, welcher eines dieser Analogsignale (D11, D21, D31) erzeugen kann.

16. Empfänger nach einem der Ansprüche 9 bis 15,
**dadurch gekennzeichnet,**
**daß** zwischen einem Korrelator (K11, K12, K13, K21, K22, K23, K31, K32, K33) und einem Regler (RG1, RG2, RG3, RG) ein Tiefpaßfilter (L11, L12, L13, L21, L22, L23, L31, L32, L33) vorgesehen ist.

17. Empfänger nach einem der Ansprüche 9 bis 16,
**dadurch gekennzeichnet,**
**daß** ein Polarisationstransformator (PT1, PT2, PT3) einen Modenwandler (Pn, PT2', PT3') aufweist.

## Claims

1. Method for transmitting optical signals (OS1, OS2, OS3) detected in receivers (RX1, RX2), by means of polarization multiplexing or polarization shift keying, **characterized in that** a correlation product (KP11, KP12, KP13, KP21, KP22, KP23, KP31, KP32, KP33) of an analogue signal (D11, D21, D31) of a receiver (RX1, RX2, RX3) and a digital signal (DD11, DD21, DD31) of a receiver (RX1, RX2, RX3) is formed in a correlator
(K11, K12, K13, K21, K22, K23, K31, K32, K33), **in that** the absolute value of the chronological mean value of this correlation product (KP11, KP12, KP13, KP21, KP22, KP23, KP31, KP32, KP33) is at least approximately adjusted to an extreme value by means of a regulator (RG1, RG2, RG3, RG) which can control a polarization transformer (PT1, PT2, PT3).

2. Method according to Claim 1, **characterized in that** a correlation product (KP11, KP12, KP21, KP22, KP31, KP32) of an analogue signal (D11, D21, D31) of a receiver (RX1, RX2, RX3) and a digital signal (DD11, DD21, DD31) of another receiver (RX1, RX2, RX3) is formed in a correlator (K12, K13, K21, K23, K31, K32), **in that** the absolute value of the chronological mean value of this correlation product (KP12, KP13, KP21, KP23, KP31, KP32) is at least approximately minimized by means of a regulator (RG1, RG2, RG3, RG) which can control a polarization transformer (PT1, PT2, PT3).

3. Method according to Claim 2, **characterized in that** the absolute values of the mean values of a plurality of correlation products (KP12, KP13, KP21, KP23, KP31, KP32) are minimized.

4. Method according to Claim 1, **characterized in that** a correlation product (KP11, KP22, KP33) of an analogue signal (D11, D21, D31) of a receiver (RX1, RX2, RX3) and a digital signal (DD11, DD21, DD31) of the same receiver (RX1, RX2, RX3) is formed in a correlator (K11, K22, K33), **in that** the absolute value of the chronological mean value of this correlation product (KP11, KP22, KP33) is at least approximately maximized by means of a regulator (RG1, RG2, RG3, RG) which can control a polarization transformer (PT1, PT2, PT3).

5. Method according to Claim 4, **characterized in that** the absolute values of the mean values of a plurality of correlation products (KP11, KP22, KP33) are maximized.

6. Method according to Claim 2 or 3, **characterized in that** the power of at least one analogue signal (D11, D21, D31) of a receiver (RX1, RX2, RX3) is maximized.

7. Method according to Claim 6, **characterized in that** these optical signals (OS1, OS2, OS3) are transmitted by means of four-stage polarization shift keying.

8. Method according to one of Claims 1 to 7, **characterized in that** this digital signal (DD11, DD21, DD31) is an output signal of a decision circuit (DDM1, DDM2, DDM3).

9. Receiver for optical signals (OS1, OS2) with polarization multiplexing or polarization shift keying with a separator/detector (SD) containing a polarization transformer (PT1), and receivers (RX1, RX2), **characterized in that** there is a receiver (RX1, RX2, RX3) to which a correlator (K11, K12, K13, K21, K22, K23, K31, K32, K33) is connected which can form a correlation product (KP11, KP12, KP13, KP21, KP22, KP23, KP31, KP32, KP33) of an analogue signal (D11, D21, D31) of one of these receivers (RX1, RX2, RX3) and a digital signal (DD11, DD21, DD31) of one of these receivers (RX1, RX2, RX3),
**in that** a regulator (RG1, RG2, RG3, RG) is provided which can control a polarization transformer (PT1, PT2, PT3) in such a way that the absolute value of the chronological mean value of this correlation product (KP11, KP12, KP13, KP21, KP22, KP23, KP31, KP32, KP33) is at least approximately adjusted to an extreme value.

10. Receiver according to Claim 9, **characterized in that** there is a receiver (RX1, RX2, RX3) to which a correlator (K12, K13, K21, K23, K31, K32) is connected which can form a correlation product (KP12, KP13, KP21, KP23, KP31, KP32) of an analogue signal (D11, D21, D31) of one of these receivers (RX1, RX2, RX3) and a digital signal (DD11, DD21, DD31) of one of these receivers (RX1, RX2, RX3), **in that** a regulator (RG1, RG2, RG3, RG) is provided which can control a polarization transformer (PT1, PT2, PT3) in such a way that the absolute value of the chronological mean value of this correlation product (KP12, KP13, KP21, KP23, KP31, KP32) is at least approximately minimized.

11. Receiver according to Claim 9,
**characterized in that** there is a receiver (RX1, RX2, RX3) to which a correlator (K11, K22, K33) is connected which can form a correlation product (KP11, KP22, KP33) an analogue signal (D11, D21, D31) of one of these receivers (RX1, RX2, RX3) and a digital signal (DD11, DD21, DD31) of one of these receivers (RX1, RX2, RX3),
**in that** a regulator (RG1, RG2, RG3, RG) is provided which can control a polarization transformer (PT1, PT2, PT3) in such a way that the absolute value of the chronological mean value of this correlation product (KP11, KP22, KP33) is at least approximately maximized.

12. Receiver according to Claim 10, **characterized in that** this regulator (RG1, RG2, RG3, RG) can control a polarization transformer (PT1, PT2, PT3) in such a way that, in addition, the absolute value of the chronological mean value of the power of one of these analogue signals (D11, D21, D31) is maximized.

13. Receiver according to Claim 12, **characterized in that** two of these receivers (RX1, RX2; or RX1, RX3; or RX2, RX3), which receive optical signals (OS1, OS2, OS3) transmitted by means of four-stage polarization shift keying, are provided.

14. Receiver according to one of Claims 9 to 13, **characterized in that** there is a decision circuit (DDM1, DDM2, DDM3) which can generate this digital signal (DD11, DD21, DD31).

15. Receiver according to one of Claims 9 to 14, **characterized in that** one of these decision circuits (DDM1, DDM2, DDM3) is at the same time a demultiplexer, and **in that** there is an analogue demultiplexer (DM1, DM2, DM3) which can generate one of these analogue signals (D11, D21, D31).

16. Receiver according to one of Claims 9 to 15, **characterized in that** a low-pass filter (L11, L12, L13, L21, L22, L23, L31, L32, L33) is provided between a correlator (K11, K12, K13, K21, K22, K23, K31, K32, K33) and a regulator (RG1, RG2, RG3, RG).

17. Receiver according to one of Claims 9 to 16, **characterized in that** a polarization transformer (PT1, PT2, PT3) has a mode converter (Pn, PT2', PT3').

## Revendications

1. Procédé pour la transmission de signaux optiques (OS1, OS2, OS3) au moyen du multiplexage par polarisation ou de la modulation par polarisation, lesquels sont détectés dans des récepteurs (RX1, RX2),
**caractérisé en ce que**,
dans un corrélateur (K11, K12, K13, K21, K22, K23, K31, K32, K33), un produit de corrélation (KP11, KP12, KP13, KP21, KP22, KP23, KP31, KP32, KP33) entre un signal analogique (D11, D21, D31) d'un récepteur (RX1, RX2, RX3) et un signal numérique (DD11, DD21, DD31) d'un récepteur (RX1, RX2 ,RX3) est constitué et **en ce que** la valeur de la moyenne temporelle de ce produit de corrélation (KP11, KP12, KP13, KP21, KP22, KP23, KP31, KP32, KP33) est amenée au moins approximativement à un extremum par un régulateur (RG1, RG2, RG3, RG) qui peut commander un transformateur de polarisation (PT1, PT2, PT3).

2. Procédé selon la revendication 1,
**caractérisé en ce que**,
dans un corrélateur (K12, K13, K21, K23, K31, K32), un produit de corrélation (KP11, KP12, KP21, KP22, KP31, KP32) entre un signal analogique (D11, D21, D31) d'un récepteur (RX1, RX2, RX3) et un signal numérique (DD11, DD21, DD31) d'un autre récepteur (RX1, RX2, RX3) est constitué et **en ce que** la valeur de la moyenne temporelle de ce produit de corrélation (KP12, KP13, KP21, KP23, KP31, KP32) est minimisée au moins approximativement par un régulateur (RG1, RG2, RG3, RG) qui peut commander un transformateur de polarisation (PT1, PT2, PT3).

3. Procédé selon la revendication 2,
**caractérisé en ce que**
les valeurs des moyennes de plusieurs produits de corrélation (KP12, KP13, KP21, KP23, KP31, KP32) sont minimisées.

4. Procédé selon la revendication 1,
**caractérisé en ce que**,
dans un corrélateur (K11, K22, K33), un produit de corrélation (KP11, KP22, KP33) entre un signal analogique (D11, D21, D31) d'un récepteur (RX1, RX2, RX3) et un signal numérique (DD11, DD21, DD31) du même récepteur (RX1, RX2, RX3) est constitué et **en ce que** la valeur de la moyenne temporelle de ce produit de corrélation (KP11, KP22, KP33) est maximisée au moins approximativement par un régulateur (RG1, RG2, RG3, RG) qui peut commander un transformateur de polarisation (PT1, PT2, PT3).

5. Procédé selon la revendication 4,
**caractérisé en ce que**
les valeurs des moyennes de plusieurs produits de corrélation (KP11, KP22, KP33) sont maximisées.

6. Procédé selon la revendication 2 ou 3,
**caractérisé en ce que**
la puissance d'au moins un signal analogique (D11, D21, D31) d'un récepteur (RX1, RX2, RX3) est maximisée.

7. Procédé selon la revendication 6,
**caractérisé en ce que**
la transmission de ces signaux optiques (OS1, OS2, OS3) se fait par modulation par polarisation à quatre niveaux.

8. Procédé selon l'une des revendications 1 à 7,
**caractérisé en ce que**
ce signal numérique (DD11, DD21, DD31) est un signal de sortie d'un décideur (DDM1, DDM2, DDM3).

9. Récepteur de signaux optiques (OS1, OS2) avec multiplexage par polarisation ou modulation par polarisation avec un séparateur / détecteur (SD), comprenant un transformateur de polarisation (PT1) et des récepteurs (RX1, RX2),
**caractérisé**
**par** la présence d'un récepteur (RX1, RX2, RX3) auquel est connecté un corrélateur (K11, K12, K13, K21, K22, K23, K31, K32, K33) qui peut constituer un produit de corrélation (KP11, KP12, KP13, KP21, KP22, KP23, KP31, KP32, KP33) entre un signal analogique (D11, D21, D31) de l'un de ces récepteurs (RX1, RX2, RX3) et un signal numérique (DD11, DD21, DD31) de l'un de ces récepteurs (RX1, RX2 ,RX3) et
en ce qu'est prévu un régulateur (RG1, RG2, RG3, RG) qui peut commander un transformateur de polarisation (PT1, PT2, PT3) de manière telle que la valeur de la moyenne temporelle de ce produit de corrélation (KP11, KP12, KP13, KP21, KP22, KP23, KP31, KP32, KP33) est amenée au moins approximativement à un extremum.

10. Récepteur selon la revendication 9,
**caractérisé**
**par** la présence d'un récepteur (RX1, RX2, RX3) auquel est connecté un corrélateur (K12, K13, K21, K23, K31, K32) qui peut constituer un produit de corrélation (KP12, KP13, KP21, KP23, KP31, KP32) entre un signal analogique (D11, D21, D31) de l'un de ces récepteurs (RX1, RX2, RX3) et un signal numérique (DD11, DD21, DD31) de l'un de ces récepteurs (RX1, RX2 ,RX3) et
en ce qu'est prévu un régulateur (RG1, RG2, RG3, RG) qui peut commander un transformateur de polarisation (PT1, PT2, PT3) de manière telle que la valeur de la moyenne temporelle de ce produit de corrélation (KP12, KP13, KP21, KP23, KP31, KP32) est minimisée au moins approximativement.

11. Récepteur selon la revendication 9,
**caractérisé**
**par** la présence d'un récepteur (RX1, RX2, RX3) auquel est connecté un corrélateur (K11, K22, K33) qui peut constituer un produit de corrélation (KP11, KP22, KP33) entre un signal analogique (D11, D21, D31) de l'un de ces récepteurs (RX1, RX2, RX3) et un signal numérique (DD11, DD21, DD31) de l'un de ces récepteurs (RX1, RX2 ,RX3) et
en ce qu'est prévu un régulateur (RG1, RG2, RG3, RG) qui peut commander un transformateur de polarisation (PT1, PT2, PT3) de manière telle que la valeur de la moyenne temporelle de ce produit de corrélation (KP11, KP22, KP33) est maximisée au moins approximativement.

12. Récepteur selon la revendication 10,
**caractérisé en ce que**
ce régulateur (RG1, RG2, RG3, RG) peut commander un transformateur de polarisation (PT1, PT2, PT3) de manière telle qu'en outre la valeur de la moyenne temporelle de la puissance d'un de ces signaux analogiques (D11, D21, D31) est maximisée.

13. Récepteur selon la revendication 12,
**caractérisé en ce que**
sont prévus deux de ces récepteurs (RX1, RX2; ou RX1, RX3; ou RX2, RX3), lesquels reçoivent des signaux optiques (OS1, OS2, OS3) transmis par modulation par polarisation à quatre niveaux.

14. Récepteur selon l'une des revendications 9 à 13,
**caractérisé par**
la présence d'un décideur (DDM1, DDM2, DDM3) qui peut générer ce signal numérique (DD11, DD21, DD31).

15. Récepteur selon l'une des revendications 9 à 14,
**caractérisé en ce que**
l'un de ces décideurs (DDM1, DDM2, DDM3) est en même temps un démultiplexeur et par la présence d'un démultiplexeur analogique (DM1, DM2, DM3) qui peut générer l'un de ces signaux analogiques (D11, D21, D31).

16. Récepteur selon l'une des revendications 9 à 15,
**caractérisé en ce**
**qu'**est prévu un filtre passe-bas (L11, L12, L13, L21, L22, L23, L31, L32, L33) entre un corrélateur (K11, K12, K13, K21, K22, K23, K31, K32, K33) et un régulateur (RG1, RG2, RG3, RG).

17. Récepteur selon l'une des revendications 9 à 16,
**caractérisé en ce**
**qu'**un transformateur de polarisation (PT1, PT2, PT3) comporte un convertisseur de mode (Pn, PT2', PT3').
